# FASCICULE DE BREVET EUROPEEN

(11) **EP 2 834 584 B1**
(45) Date de publication et mention de la délivrance du brevet: **28.07.2021**
(21) Numéro de dépôt: 13724392.9
(22) Date de dépôt: 03.04.2013
(51) Int. Cl.: F28F 3/12, F28D 7/00, B23K 20/02

(54) **PROCEDE DE REALISATION D'UN MODULE D'ECHANGEUR DE CHALEUR A AU MOINS DEUX CIRCUITS DE CIRCULATION DE FLUIDE ET ECHANGEUR DE CHALEUR OBTENU PAR CE PROCEDE**
VERFAHREN ZUR HERSTELLUNG EINES WÄRMETAUSCHMODULS MIT MIND. ZWEI FLUIDKREISLÄUFEN UND WÄRMETAUSCHER HERGESTELLT NACH DEM VERFAHREN
MANUFACTURING PROCESS FOR A HEAT EXCHANGE MODULE WITH AT LEAST TWO FLUID CIRCUITS AND HEAT EXCHANGER OBTAINED BY THAT PROCESS

(30) Priorité: 04.04.2012 FR 1253113
(43) Date de publication de la demande: 11.02.2015
(73) Titulaire: Commissariat à l'Énergie Atomique et aux Énergies Alternatives, 75015 Paris (FR)
(72) Inventeur: RIGAL, Emmanuel, F-38360 Sassenage (FR); LEIBOLD, Jean-Marc, F-38800 Pont De Claix (FR); VIDOTTO, Fabien, F-38600 Fontaine (FR)
(74) Mandataire: Nony
(86) Numéro de dépôt international: PCT/IB2013/052655
(87) Numéro de publication internationale: WO 2013/150458

(56) Documents cités:
- EP-A1- 0 025 735
- WO-A1-2006/067349
- WO-A1-2011/036207
- DE-A1- 1 551 448
- DE-A1-102004 044 861
- FR-A1- 2 936 179
- US-A- 3 847 211
- None

## Description

### Domaine technique

La présente invention concerne les échangeurs de chaleur à au moins deux circuits de fluide comportant chacun des canaux.

L'invention a trait plus particulièrement à un nouveau procédé de fabrication de tels échangeurs par soudage par diffusion obtenu par la technique de compression isostatique à chaud (CIC).

Les échangeurs de chaleur connus comprennent un ou au moins deux circuits à canaux de circulation interne de fluide. Dans les échangeurs à un seul circuit, les échanges thermiques se réalisent entre le circuit et un fluide environnant dans lequel il baigne. Dans les échangeurs à au moins deux circuits de fluide, les échanges thermiques se réalisent entre les deux circuits de fluide.

Il est connu des réacteurs chimiques qui mettent en œuvre un procédé en continu selon lequel on injecte simultanément une quantité faible de co-réactants, à l'entrée d'un premier circuit de fluide, de préférence équipé d'un mélangeur, et on récupère le produit chimique obtenu en sortie dudit premier circuit. Parmi ces réacteurs chimiques connus, certains comprennent un deuxième circuit de fluide, appelé usuellement utilité, et dont la fonction est de contrôler thermiquement la réaction chimique, soit en apportant la chaleur nécessaire à la réaction, soit au contraire en évacuant la chaleur dégagée par celle-ci. De tels réacteurs chimiques à deux circuits de fluide avec utilité sont usuellement appelés échangeurs-réacteurs.

La présente invention concerne aussi bien la réalisation d'échangeurs de chaleur à fonction uniquement d'échanges thermiques que la réalisation d'échangeurs-réacteurs. Aussi, par « échangeur de chaleur à au moins deux circuits de fluide », il faut comprendre dans le cadre de l'invention, aussi bien un échangeur de chaleur à fonction uniquement d'échanges thermiques qu'un échangeur-réacteur.

### Etat de la technique

Les échangeurs de chaleur, dits à plaques, existants présentent des avantages importants par rapports aux échangeurs de chaleur, dits à tubes, existants, en particulier leurs performances thermiques et leur compacité grâce à un rapport de la surface sur le volume d'échanges thermiques favorablement élevé.

Les échangeurs à tubes connus sont par exemple des échangeurs à tubes et calandre, dans lesquels un faisceau de tubes droits ou cintrés en forme de U ou en forme d'hélice est fixé sur des plaques percées et disposé à l'intérieur d'une enceinte dénommée calandre. Dans ces échangeurs à tubes et calandre, l'un des fluides circule à l'intérieur des tubes tandis que l'autre des fluides circule à l'intérieur de la calandre. Ces échangeurs à tubes et calandre présentent un volume important et sont donc de faible compacité.

Les échangeurs à plaques connus sont plus compacts et sont obtenus par empilement de plaques comportant des canaux et assemblées entre elles.

Les canaux sont réalisés par emboutissage de plaques, le cas échéant par ajout de feuillards pliés sous forme d'ailettes ou par usinage de rainures. L'usinage est réalisé par des moyens mécaniques, par exemple par fraisage ou par voie chimique. L'usinage chimique est usuellement appelé gravage chimique ou électrochimique.

L'assemblage des plaques entre elles a pour objectif d'assurer l'étanchéité et/ou la tenue mécanique des échangeurs, notamment la tenue à la pression des fluides circulant à l'intérieur.

Plusieurs techniques d'assemblage sont connues et sont mises en œuvre en fonction du type d'échangeur à plaques souhaité. L'assemblage peut ainsi être obtenu par des moyens mécaniques, tels que des tirants maintenant l'empilement serré entre deux plaques épaisses et rigides disposées en extrémité de l'empilement. L'étanchéité des canaux est alors obtenue par écrasement de joints rapportés. L'assemblage peut être également obtenu par soudage, généralement limité à la périphérie des plaques, ce qui nécessite parfois d'insérer, ultérieurement au soudage, l'échangeur dans une calandre pour permettre sa tenue à la pression des fluides. L'assemblage peut encore être obtenu par brasage, en particulier pour des échangeurs pour lesquels des ailettes sont ajoutées. L'assemblage peut enfin être obtenu par soudage par diffusion (soudage-diffusion).

Les deux dernières techniques citées permettent de réaliser des échangeurs particulièrement performants en termes de tenue mécanique. En effet, grâce à ces deux techniques, l'assemblage est obtenu non seulement à la périphérie des plaques mais aussi à l'intérieur de l'échangeur.

Les échangeurs de chaleur à plaques obtenus par soudage par diffusion présentent des joints encore plus performants mécaniquement que les joints des échangeurs obtenus par brasage du fait même de l'absence du métal d'apport requis pour le brasage.

Le soudage-diffusion consiste à obtenir un assemblage à l'état solide en appliquant une force à chaud sur les pièces à assembler pendant un temps donné. La force appliquée a une fonction double: elle permet l'accostage, c'est-à-dire la mise en contact des surfaces à souder, et elle facilite l'élimination par fluage-diffusion de la porosité résiduelle dans les joints (interfaces).

La force peut être appliquée par compression uniaxiale, par exemple à l'aide d'une presse équipée d'un four ou simplement à l'aide de masses disposées au sommet de l'empilement des pièces à assembler. Ce procédé est communément appelé soudage-diffusion uniaxial et il est appliqué industriellement pour la fabrication d'échangeurs de chaleur à plaques.

Une limitation importante du procédé soudage-diffusion uniaxial tient au fait qu'il ne permet pas de souder des joints d'orientation quelconque par rapport à la direction d'application de la force de compression uniaxiale.

Un autre procédé alternatif pallie cet inconvénient. Dans cet autre procédé, la force est appliquée par la pression d'un gaz en utilisant une enceinte étanche. Ce procédé est communément appelé compression isostatique à chaud (CIC). Un autre avantage du procédé de soudage-diffusion par CIC comparativement au procédé de soudage-diffusion uniaxial est qu'il est plus largement répandu à l'échelle industrielle. En effet, la CIC est aussi utilisée pour le traitement par lots de pièces de fonderie ainsi que pour la compaction de poudres.

Les échangeurs compacts à plaques obtenus par soudage par diffusion actuellement connus présentent aussi des inconvénients majeurs que l'on peut énumérer comme suit.

Un premier inconvénient majeur est le coût de fabrication des plaques, en particulier dans le cas de plaques à canaux usinés. Le gravage chimique permet certes une certaine réduction de coût par rapport à l'usinage mécanique mais qui est toute relative : en effet, rapporté à une longueur donnée, le coût d'un canal d'un échangeur à plaques réalisé par gravage chimique est supérieur à celui d'un échangeur à tubes. En outre, le gravage chimique génère des inconvénients supplémentaires, tels qu'une précision dimensionnelle insuffisante, un arrondissement des arêtes défavorable au soudage par diffusion ou une pollution résiduelle des surfaces à assembler par des résidus des produits de décapage et de masquage utilisés.

Un second inconvénient majeur des échangeurs compacts à plaques soudées par diffusion est la difficulté à trouver un bon compromis entre la résistance mécanique des joints d'interface obtenus, la déformation acceptable des canaux et le grossissement de grain du matériau de structure.

En effet, dans le procédé de soudage-diffusion uniaxial, on peut appliquer une force de faible voire très faible valeur qui déforme peu les canaux, à la condition que les plaques soient bien en bien en contact mutuel et que la faible valeur de la force soit compensée par une augmentation de la température de soudage pour l'élimination de la porosité aux interfaces. Ces conditions impliquent inévitablement un grossissement du grain du matériau qui devient rapidement rédhibitoire vis-à-vis de sa résistance à la corrosion et de ses propriétés mécaniques. En outre, dans de nombreuses applications, il est critique que le nombre de grains de matériau situés entre deux circuits de fluide soit minimal pour éviter les risques de fuite.

Dans le procédé de soudage-diffusion par CIC, l'empilement des pièces est préalablement encapsulé dans un conteneur étanche pour éviter que le gaz ne pénètre dans les interfaces constituées par les surfaces à souder. La pression de gaz habituellement utilisée est élevée, de l'ordre de 500 à 2000 bar, typiquement 1000 bar. La pression minimale de fonctionnement des enceintes industrielles adaptées pour mettre en œuvre la CIC est quant à elle comprise entre 40 et 100 bar. Or, les joints soudés à cette pression sont moins résistants que ceux obtenus à haute pression par exemple à 1000 bar, toutes les autres conditions étant égales par ailleurs (matériau, température, état de surface...). De surcroît, cette pression entre 40 et 100 bar, est encore trop importante pour des plaques à grande densité de canaux, c'est-à-dire des plaques dans lesquelles leur surface de contact déterminée avec une plaque adjacente est faible par rapport à la surface apparente. En effet, pour ce type de plaques, même une pression de quelques dizaines de bar suffit à engendrer une déformation inacceptable des canaux. Une solution possible peut consister à diminuer la température d'assemblage pour que le matériau résiste mieux à la pression, mais cela revient à dégrader encore la résistance des joints. Une autre solution possible peut consister à changer le dessin des canaux pour rendre l'empilement plus résistant à la pression, mais cela revient à rendre l'échangeur à plaques moins compact.

Il est déjà connu plusieurs solutions pour réaliser des échangeurs de chaleur par soudage-diffusion par CIC tout en maîtrisant la géométrie des canaux et la qualité des interfaces. Le point commun à ces solutions est de réaliser un empilement tel qu'il est possible de laisser les canaux ouverts pendant le cycle de CIC. Ainsi, le gaz de pressurisation occupe tout l'espace intérieur des canaux et par là ceux-ci ne se déforment pas ou très peu. Il devient alors possible de réaliser la CIC à haute pression.

Une première solution connue consiste à utiliser pour chaque canal un tube, et de souder au moins une extrémité de ce dernier de manière étanche au conteneur lui-même étanche. Chaque tube est au préalable inséré dans une rainure d'une plaque puis les tubes insérés dans les rainures d'une même plaque sont mis en sandwich avec une autre plaque rainurée ou non qui est adjacente. Un des inventeurs de la présente demande a déjà mis en œuvre cette solution [1]. L'étape préalable impérative de soudage étanche d'au moins une extrémité de chaque tube au conteneur étanche implique intrinsèquement un nombre et une densité de tubes limitée. Un inconvénient majeur de cette solution est qu'elle implique que les canaux de l'échangeur soient réalisables sous forme de tubes, ce qui exclut des formes complexes, telles que par exemple des formes avec des changements de direction rapides qui sont irréalisables par cintrage. Ainsi, au lieu de formes complexes, les canaux sont réalisés sous des formes plus simples et moins compactes. En d'autres termes, cette première solution connue dégrade la compacité d'un échangeur de chaleur comparativement à un échangeur de chaleur à plaques rainurées soudées par diffusion selon l'état de l'art, tel que décrit en préambule.

Une seconde solution connue est décrite dans la demande de brevet WO 2006/067349. Elle consiste essentiellement à éviter que les interfaces à souder ne débouchent dans les canaux. Ainsi, la solution selon cette demande de brevet consiste à réaliser dans des plaques métalliques des rainures à section ouverte à leurs sommets puis d'obturer ceux-ci individuellement par soudage d'une lame mince métallique, en laissant ainsi une ou les deux extrémité(s) des rainures accessibles au gaz de pressurisation. Le problème du soudage des extrémités des canaux est simplifié par rapport à la première solution connue, mais au prix de la nécessité de souder une lame par canal. Cela peut s'avérer laborieux, onéreux et difficile à mettre en œuvre dans le cas d'un grand nombre de canaux par échangeur.

Une troisième solution connue est décrite dans la demande de brevet WO 2011/026925. Les étapes suivantes sont réalisées :
- dépôt sur une plaque rainurée d'un cordon continu de matière en relief à la périphérie de chaque rainure et d'un autre cordon continu également en relief à la périphérie de la plaque,
- empilement des plaques rainurées avec leurs cordons continus dans un conteneur sans que les rainures n'aient d'extrémité débouchante;
- étanchéification du conteneur ;
- application d'un cycle de CIC à basse pression durant lequel l'étanchéité de chaque canal délimité individuellement par au moins une rainure est obtenue grâce au soudage diffusion des cordons continus ;
- perçage des canaux de sorte à faire laisser le gaz de pressurisation pénétrer dans chaque canal ;
- application d'un cycle de CIC à haute pression pour conférer aux joints de bonnes propriétés mécaniques par soudage-diffusion des surfaces délimitées par les cordons continus.

Comme pour la solution connue selon la demande de brevet WO2006/067349, cette dernière solution connue peut s'avérer laborieuse, onéreuse et difficile à mettre en œuvre dans le cas d'un grand nombre de canaux par échangeur.

La demande de brevet WO 2011/036207 divulgue un procédé de réalisation d'un composant par soudage-diffusion de trois plaques métalliques dont celle centrale est rainurée avec les motifs formant les canaux en zigzag et est prise en sandwich entre les deux plaques d'extrémité formant l'enveloppe étanche, un organe d'obturation fusible étant agencé pour obstruer les canaux, lors d'une première étape du cycle CIC de manière à souder par diffusion les interfaces des planes entre plaques sans laisser pénétrer le gaz de pressurisation dans les canaux, une deuxième étape du cycle CIC provoquant la rupture de l'organe afin de laisser pénétrer le gaz de pressurisation au sein des canaux.

La demande de brevet FR 2936179 décrit un procédé de réalisation d'échangeur de chaleur par agencement d'une pluralité de conduits métalliques entre deux plaques métallique et d'une matrice apte à loger par emboitement l'ensemble des conduits, les extrémités des conduits étant logés dans des orifices traversant ménagés dans des embouts de raccordement, de part et d'autre de l'empilement, le tout étant soumis à un traitement par CIC.

La demande de brevet DE 102004044861 divulgue dans son mode de réalisation des figures 29 et 30, un module d'échangeur à deux circuits de fluide destiné à servir d'échangeur thermique pour véhicule automobile, consistant en un empilement de plaques de mêmes dimensions et à canaux internes débouchant sur les deux extrémités, les plaques étant séparées en deux groupes avec une plaque d'un groupe donné décalée dans le sens longitudinal par rapport à une plaque de l'autre groupe, consécutive dans l'empilement, toutes les plaques d'un groupe ayant leurs extrémités alignées dans un même plan transversal de chaque côté de l'empilement.

Il existe donc un besoin d'améliorer encore les procédés de réalisation d'échangeurs de chaleur par soudage-diffusion, notamment pour obtenir des échangeurs compacts, pour améliorer la tenue mécanique de leurs joints sans engendrer de trop forte déformation des canaux, ni de grossissement de grain du matériau de structure inacceptable, et pour avoir des coûts de fabrication et une facilité de mise en œuvre acceptables.

### Exposé de l'invention

Pour répondre à ce besoin, l'invention propose un premier procédé de réalisation d'un module d'échangeur de chaleur à au moins deux circuits de fluide comportant chacun des canaux, comportant les étapes suivantes :
a/ réalisation d'au moins deux groupes distincts de tubes métalliques, chaque tube étant de forme allongée et ayant au moins ses deux extrémités droites dont l'une est ouverte et l'autre est borgne;
b/ alignement de chacun des deux groupes avec positionnement côte à côte des tubes selon au moins une rangée par groupe;
c/ empilage en alternance avec positionnement tête-bêche de la (des) rangée(s) d'un groupe et de celle(s) de l'autre groupe de sorte à avoir les rangées les unes sur les autres et les extrémités borgnes des tubes d'un groupe disposées du même côté latéral de l'empilement que les extrémités ouvertes des tubes de l'autre groupe ;
d/ décalage, selon une direction orthogonale à la direction d'empilage, de la (des) rangée(s) d'un groupe relativement à celle(s) de l'autre groupe, de sorte à ménager des jeux, sur chaque côté latéral de l'empilement, entre les extrémités borgnes des tubes d'un groupe et les extrémités ouvertes des tubes de l'autre groupe;
e/ encapsulation de l'empilement par mise en place respectivement d'une enveloppe métallique sur les côtés longitudinaux de l'empilement de tubes et de lames métalliques en bout des extrémités borgnes décalées des tubes, dans chaque jeu ménagé;
f/ soudage à la périphérie de l'enveloppe, de chaque lame et de chaque extrémité ouverte de tube de sorte à rendre étanche l'intérieur de l'empilement encapsulé tout en laissant dégagées les extrémités ouvertes des tubes;
i/ application d'un cycle de compression isostatique à chaud (CIC) à haute pression à l'empilement dégazé en laissant pénétrer le gaz de pressurisation dans tous les tubes par leurs extrémités ouvertes de sorte à obtenir un soudage par diffusion entre les constituants de l'empilement encapsulé, les tubes soudés par diffusion de chaque groupe formant les canaux d'un circuit de fluide du module.
   Selon un mode de réalisation avantageux de l'invention, l'enveloppe comporte un orifice traversant et on réalise les étapes suivantes entre les étapes f/ et i/ :
g/ dégazage de l'intérieur de l'empilement étanche à travers l'orifice traversant;
h/ fermeture de l'orifice traversant.

Ces étapes g/ et h/ sont avantageusement réalisées en fonction des matériaux des constituants de l'empilement et des performances visées en termes de résistance mécanique des zones de soudure par diffusion.

Ainsi, l'invention concerne un procédé de réalisation d'un échangeur de chaleur à au moins deux fluides, à partir de tubes assemblés par soudage diffusion en CIC à haute pression. Les tubes qui constituent au final les canaux de circulation de fluide, ont un coût de fabrication moindre que des rainures usinées dans des plaques comme selon l'état de l'art. Du fait que selon le procédé de l'invention, aucune surface à souder ne débouche dans les tubes, il est possible d'appliquer une pression d'assemblage élevée garante de bonnes propriétés mécaniques et d'une faible déformation des canaux: le gaz de pressurisation pénétrant dans les tubes, il n'y a pas de risque d'écrasement de ces derniers. L'utilisation du soudage diffusion en CIC à haute pression permet ainsi d'éviter d'avoir recours à de très hautes températures de soudage et facilite donc la rétention d'une taille de grain de matériau de structure acceptable.

Le soudage d'étanchéité selon l'étape f/ du procédé selon l'invention peut être réalisé par tout moyen approprié tel que le soudage laser, TIG (acronyme anglais utilisé pour soudage « Tungsten Inert Gas ») ou autre.

L'orifice traversant dans l'enveloppe métallique permet d'y souder un queusot destiné à dégazer l'empilement selon l'étape g/ et à tester son étanchéité. L'ensemble des pièces de l'empilement est de préférence préalablement nettoyé pour garantir un soudage-diffusion de qualité. Après avoir dégazé l'empilement par le queusot on ferme celui-ci de façon étanche de préférence par écrasement et soudage.

L'étape i/ d'assemblage proprement dit par soudage-diffusion en CIC consiste donc à appliquer à l'empilement un cycle de CIC à haute pression. Ce cycle est choisi notamment en fonction du (des) matériau(x) des constituants de l'empilement. En particulier, on peut choisir la température de palier et les vitesses de chauffage et de pressurisation (respectivement de refroidissement et dépressurisation) notamment en tenant compte des capacités de l'enceinte de CIC utilisée. Avantageusement, un cycle CIC selon l'étape i/, comprend un chauffage en une durée comprise entre 1 et 4h avec une pressurisation simultanée à une pression comprise entre 500 et 2000 bar, puis un palier en de maintien température et pression d'une durée comprise entre 1 à 4h et enfin un refroidissement avec dépressurisation simultanée d'une durée comprise entre 1 et 10h. Pendant cette étape i/ de CIC, chaque pièce de l'empilement se soude par diffusion avec les pièces en contact avec elle.

Le procédé selon l'invention peut comporter une étape j/, ultérieure à l'étape i/, consistant en un traitement thermique destiné à restaurer les propriétés des matériaux métalliques des pièces constituant ledit module. Il peut s'agir d'un traitement d'hypertrempe.

Le procédé selon l'invention permet d'obtenir des échangeurs de chaleur à au moins deux circuits de fluide, qui sont compacts et dont l'assemblage par soudage diffusion en CIC à haute pression permet de ne pas générer d'écrasement des canaux ni d'altération excessive du matériau de structure par grossissement du grain inacceptable.

En outre, le coût et la facilité de mise en œuvre du procédé selon l'invention sont acceptables.

Selon un mode de réalisation avantageux, les tubes réalisés selon l'étape a/ sont des tubes droits.

Les tubes peuvent être tous identiques entre eux.

Ainsi, selon une variante avantageuse, les tubes d'au moins un groupe sont droits et de section carrée sur leur longueur.

Les tubes d'au moins un groupe peuvent être droits et de section circulaire sur la majeure partie de leur longueur, leurs extrémités ouverte et borgne étant de section carrée.

Au moins une des extrémités de section carrée peut être formée par étirage de la section circulaire des tubes.

Alternativement, au moins une des extrémités de section carrée peut être réalisée par soudage d'un bouchon plein d'extrémité de section carrée.

Le bouchon peut être de préférence un bouchon plein formant ainsi une extrémité borgne d'un tube. Le bouchon plein peut être avantageusement en matériau apte à être dissous par voie chimique.

Selon une variante, au moins une des extrémités de section carrée peut être formée par un embout de section carrée dans lequel la section circulaire d'un tube est emmanchée. De préférence, on prévoit un seul embout pour une rangée de tubes tous emmanchés à l'intérieur dudit embout.

Selon un mode de réalisation avantageux, l'étape e/ est réalisée avec une enveloppe comportant quatre plaques métalliques, chacune étant plaquée contre un des quatre bords longitudinaux de l'empilement et l'étape f/ étant réalisée par soudage des quatre plaques métalliques deux à deux. Au moins une des plaques peut comporter l'orifice traversant par lequel l'étape g/ de dégazage est réalisée.

De préférence, le cycle de CIC selon l'étape i/ est réalisé à une pression comprise entre 500 et 2000 bar, avantageusement 1000 bar.

Selon un mode de réalisation avantageux, le procédé selon l'invention comporte une étape j/, ultérieure à l'étape i/, consistant en un traitement thermique destiné à restaurer les propriétés des matériaux métalliques des pièces constituant ledit module.

Selon un mode de réalisation avantageux, le procédé selon l'invention comporte une étape l/ de perçage transversal des tubes, dans le plan de chaque rangée et à proximité des côtés latéraux de l'empilement, les orifices de chaque groupe de tubes, réalisés par perçage, débouchant sur un côté longitudinal de l'empilement à travers l'enveloppe en formant une colonne, les deux colonnes d'orifices étant agencées chacune à proximité d'un côté latéral de l'empilement et à l'opposé l'une de l'autre.

Selon un mode de réalisation avantageux, le procédé selon l'invention comporte une étape m/ de soudage d'un collecteur de fluide sur l'enveloppe, en regard de et autour de chaque colonne d'orifice.

Selon un mode de réalisation avantageux, le procédé selon l'invention comporte une étape de nettoyage des constituants de l'empilement encapsulé avant l'étape g/ de dégazage. L'étendue de la protection recherchée par cette demande de brevet est limitée par les revendications indépendantes, à savoir la revendication 1, la revendication 2 et la revendication 13.

La revendication 13 a trait à un module d'échangeur de chaleur à au moins deux circuits de fluide obtenu selon le procédé de la revendication 1 ou 2.

Avantageusement, au moins les tubes, les lames et l'enveloppe sont en acier austénitique, tel que l'acier 316L.

L'invention a enfin pour objet un système d'échangeur de chaleur comprenant une pluralité de modules comme ci-dessus, reliés entre eux.

### Description détaillée

D'autres avantages et caractéristiques de l'invention ressortiront mieux à la lecture de la description détaillée d'exemples de mise en œuvre de l'invention faite à titre illustratif et non limitatif en référence aux figures suivantes parmi lesquelles :
- la figure 1 est une vue en perspective et en éclaté partiel d'un ensemble de pièces à partir duquel un premier exemple du procédé de réalisation d'un module d'échangeur de chaleur à deux circuits de fluide selon l'invention est mis en œuvre;
- la figure 1A est une vue en perspective éclatée d'un tube métallique avec l'une de ses extrémités utilisé dans l'ensemble de la figure 1;
- la figure 1B est une vue en perspective avec arraché partiel d'un module d'échangeur de chaleur obtenu à partir de l'ensemble de pièces de la figure 1 et intégrant un collecteur d'entrée et un collecteur de sortie d'un des deux fluides ;
- la figure 2 est une vue en perspective et en éclaté partiel d'un ensemble de pièces à partir duquel un deuxième exemple du procédé de réalisation d'un module d'échangeur de chaleur à deux circuits de fluide selon l'invention est mis en œuvre;
- les figures 2A à 2C sont des vues en perspective respectivement d'un tube métallique et de ses extrémités utilisé dans l'ensemble de la figure 2;
- la figure 3 est une vue en perspective et en éclaté partiel d'un ensemble de pièces à partir duquel un troisième exemple du procédé de réalisation d'un module d'échangeur-réacteur selon l'invention est mis en œuvre.

Dans la description qui va suivre, les termes «supérieur » et « inférieur » sont à considérer en référence à la direction Z d'empilage des tubes conformes à l'invention.

De même, les termes « longitudinal » et « latéral » sont à considérer en relation avec la forme géométrique de l'empilement elle-même déterminée par la forme allongée des tubes qui le constituent. Ainsi, les quatre côtés longitudinaux de l'empilement sont ceux qui s'étendent parallèlement à l'axe X longitudinal des tubes. Les deux côtés latéraux de l'empilement sont ceux à l'extrémité des tubes et qui s'étendent orthogonalement à l'axe X longitudinal des tubes.

### Exemple 1

Etape a/: On réalise un module d'échangeur de chaleur 1 à deux circuits de fluide à partir d'une pluralité de tubes métalliques 2 tous identiques entre eux.

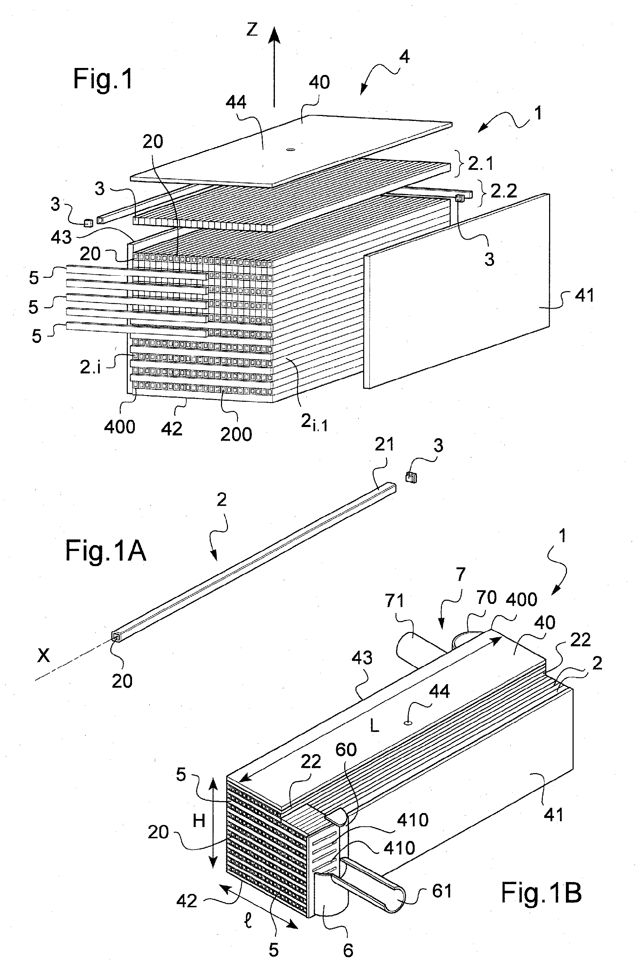

Tel que mieux illustré en figure 1A, chaque tube métallique 2 est droit d'axe longitudinal X, de section carrée sur toute sa longueur avec une extrémité ouverte 20 laissée telle quelle après fabrication et avec l'autre de ses extrémités 21 fermée de manière étanche par un bouchon plein 3 également de section carrée. Autrement dit, une fois finalisé, chaque tube droit 2 est ouvert à l'une de ses extrémités 20 et borgne à l'extrémité opposée 21, 3.

A titre d'exemple, un tube 2 fabriqué est en acier inoxydable 316L et présente une section carrée extérieure de 6x6mm sur une longueur de 400 mm, et une épaisseur de paroi de 1.5mm. A titre d'exemple également, un bouchon plein 3 est également en acier inoxydable 316L et est soudé par soudage TIG à l'extrémité 21 du tube 2.

Chaque tube métallique 2 de section carrée définit ainsi un canal de circulation de fluide de l'échangeur comme expliqué ci-après.

Etapes b/ à d/: Les tubes 2 obtenus sont alignés en formant des rangées contigües 2.1, 2.2....2.i-1, 2.i..., c'est-à-dire que chaque rangée est formée d'une pluralité de tubes 2 jointifs les uns avec les autres par un de leurs côtés longitudinaux dans un même plan. Toutes les rangées contigües 2.1, 2.2....2.i-1, 2.i..., ont le même nombre de tubes droits 2.

On empile en alternance avec un positionnement tête-bêche, selon une direction d'empilage Z, les rangées contigües 2.1, 2.2....2.i-1, 2.i... de sorte à avoir toutes les rangées les unes sur les autres et les extrémités borgnes des tubes 21, 3 d'une rangée 2.1, 2.3, ..2.i-1 ... disposées du même côté latéral de l'empilement que les extrémités ouvertes 20 des tubes 2 d'une rangée adjacente 2.2, 2.4, ...2.i.

Dans l'exemple illustré en figure 1, on peut voir que chaque rangée contigüe d'indice i pair 2.2, 2.4, ...2.i,.. a son extrémité ouverte 20 visible tandis que chaque rangée contigüe d'indice i-1 impair 2.1, 2.3, ...2.i-1.. a son extrémité borgne 21, 3 visible. Egalement tel qu'illustré en figure 1, chaque rangée contigüe est constituée d'un nombre égal à vingt tubes droits 2 et l'empilement est constitué d'un nombre égal à vingt rangées 2.2, 2.2, 2.3...2.20 de tubes droits.

Dans l'exemple illustré en figure 1, deux rangées adjacentes 2.1, 2.2, ...2i-1, 2i, c'est-à-dire en contact l'une avec l'autre, dans l'empilement sont positionnées tête-bêche comme ci-dessus. On peut également prévoir un positionnement tête-bêche de groupes de rangées, chaque groupe étant formé d'une pluralité de rangées contigües superposées selon la même orientation. Ainsi, par exemple, on peut prévoir d'avoir un groupe de deux rangées 2.1, 2.3 empilées l'une sur l'autre et en alternance et positionné tête-bêche avec un groupe de deux rangées 2.2, 2.4 elles-mêmes empilées l'une sur l'autre.

Dans la direction longitudinale de l'empilement, c'est-à-dire orthogonalement à la direction d'empilage Z, on réalise en outre un décalage des rangées 2.1, 2.3,..2.i-1 relativement aux autres rangées 2.2, 2.4, ..2.i de sorte à ménager sur chaque côté latéral de l'empilement des jeux entre les extrémités borgnes 21, 3 des tubes et les extrémités ouvertes 20 des tubes.

Dans l'exemple illustré en figure 1, les jeux ménagés sont tous de valeur égale. Par exemple, la valeur de ces jeux obtenus par décalage est égale à 3mm.

Etape e/ : On réalise alors une encapsulation de l'empilement par mise en place respectivement d'une enveloppe métallique 4 sur les côtés longitudinaux de l'empilement de tubes 2 et de lames métalliques 5 en bout des extrémités borgnes 3 décalées des tubes, dans chaque jeu ménagé.

Dans l'exemple illustré en figure 1, l'enveloppe métallique 4 est constituée de quatre plaques métalliques 40, 41, 42, 43 dont deux 40, 42 constituent des plaques de terminaison respectivement supérieure et inférieure de l'empilement et les deux autres 41, 43 constituent des plaques de fermeture de l'empilement. Une des plaques de l'enveloppe 4 est percée d'un orifice traversant 44.

A titre d'exemple, ces quatre plaques 40, 41, 42, 43 sont en acier inoxydable 316L et chacune d'épaisseur 4mm.

A titre d'exemple également, toutes les lames métalliques 5 sont identiques et d'épaisseur égale au jeu de décalage réalisé. Elles peuvent être réalisées en acier inoxydable 316L.

Tel qu'illustré en figure 1, l'orifice traversant 44 est réalisé dans la plaque de terminaison supérieure 40.

Etape f/: Après avoir nettoyé toutes les pièces, on procède au soudage à la périphérie de l'enveloppe 4, de chaque lame 5 et de chaque extrémité ouverte 20 de tube 2 de sorte à rendre étanche l'intérieur de l'empilement encapsulé tout en laissant dégagées les extrémités ouvertes 20 des tubes. Des lignes de soudure, typiquement par soudage TIG, peuvent être effectuées pour rendre complètement étanche l'empilement. Ainsi, des lignes de soudure sont avantageusement réalisées le long des lignes de chevauchement 400 deux-à-deux des quatre plaques métalliques 40, 41, 42, 43, d'autres lignes de soudure sont réalisées le long des lames 5 et enfin d'autres lignes de soudure sont réalisées sur les lignes d'interface 200 deux-à-deux des extrémités ouvertes 20 des tubes 2.

Etapes g/ et h/: On fixe un queusot non représenté dans l'orifice traversant 44. La fixation peut être réalisée par soudure TIG. A titre d'exemple, le queusot peut être de diamètre interne égal à 6 mm.

On réalise le dégazage de l'intérieur de l'empilement par le queusot puis le queusotage proprement dit du queusot, c'est-à-dire son pincement pour rendre l'intérieur de l'empilement dégazé étanche vis-à-vis de l'extérieur.

Etape i/ : Après dégazage et queusotage selon les étapes g/ et h/, on applique à l'empilement un cycle de CIC à haute pression comprenant un chauffage à 1080°C, une pressurisation à 1000 bar en 2h, un palier de maintien en température et en pression de 2h puis concomitamment un refroidissement et une dépressurisation en 5h. Pendant ce cycle CIC, le gaz pénètre dans tous les tubes 2 par leur extrémité ouverte 20 mais n'infiltre pas les interfaces entre les pièces de l'empilement grâce au bouchon soudé 3 et aux soudures d'étanchéité réalisées à la périphérie de l'enveloppe 4, de chaque lame 5 et de chaque extrémité ouverte 20 de tube 2.

Etape j/ : Cette étape facultative ultérieure à l'étape i/ consiste à appliquer au module un traitement thermique destiné à restaurer les propriétés des matériaux métalliques des pièces constituant le module. Il peut s'agir avantageusement d'un traitement thermique d'hypertrempe destiné à restaurer les propriétés de l'acier 316L.

Etape k/ : Ensuite, on supprime le queusot, par exemple par voie mécanique.

A ce stade du procédé, on obtient un bloc intermédiaire en forme générale de parallélépipède. A titre d'exemple, un tel bloc peut être un parallélépipède rectangle à deux faces carrées. Les dimensions L*l*H d'un tel bloc peuvent être égales à 405*128*128 mm.

Etape l/: On réalise un perçage transversal, dans le plan de chaque rangée et à proximité des côtés latéraux de l'empilement, à travers au moins d'une plaque de fermeture 41 et à travers les parois des tubes 2 de chaque rangée 2.1, 2.2, ....2.i, à l'exception des parois de tubes 2 qui sont en appui contre la plaque de fermeture 43 opposée.

Les perçages réalisés laissent intègres les lames métalliques 5 soudées en bout d'empilement. Les perçages réalisés peuvent éliminer partiellement ou complètement les bouchons pleins 3. De fait, l'épaisseur des lames métalliques 5 est choisie pour conférer au final à l'échangeur obtenu une tenue mécanique suffisante, notamment à la pression, sans qu'il y ait besoin d'une surépaisseur apporté par tout ou partie des bouchons 3. A titre d'exemple, le perçage peut être réalisé par usinage mécanique.

Tel qu'illustré en figure 1B, une fois les perçages réalisés, tous les tubes 2 d'une même rangée 2.1, 2.2, ...2.i communiquent entre eux par l'intermédiaire des orifices 22 qui s'étendent transversalement à l'axe X des tubes 2 et débouchent sur un même orifice 410 percé dans la plaque de fermeture 41 à proximité de la lame métallique 5 de la rangée concernée.

Tel qu'illustré en figure 1B, les orifices 22 et 410 peuvent être des fentes allongées de section rectangulaire.

Ainsi, une fois les perçages réalisés, tous les orifices 410 percés dans la plaque de fermeture 41 et sur lesquels débouchent les orifices 22 d'un groupe de rangées 2.1, 2.3, ...2i-1 ou 2.2, 2.4,....2i positionnées selon la même orientation au cours des étapes b/ à d/, sont alignés en formant une colonne.

Autrement dit, dans une colonne, deux orifices 410 adjacents sont distants l'un de l'autre d'une hauteur égale à l'épaisseur d'une rangée de tubes 2 positionnés tête-bêche au cours des étapes b/ à d/ et non percés à cet endroit.

Ainsi, une fois les perçages réalisés, on obtient deux colonnes d'orifices 22, 410 débouchant sur un côté longitudinal de l'empilement et agencées chacune à proximité d'un de ses deux côtés latéraux.

Dans l'exemple illustré en figure 1B, une colonne d'orifices 22, 410 débouche à travers la plaque de fermeture 41 à proximité d'un côté latéral de l'empilement et l'autre colonne débouche sur la plaque de fermeture 43 opposée à la plaque de fermeture 41 à proximité de l'autre côté latéral de l'empilement.

Alternativement, on peut bien entendu réaliser des perçages 22, 410 qui débouchent uniquement à travers une seule plaque de fermeture 41. Selon cette variante, les deux colonnes d'orifices débouchent donc à travers la même plaque de fermeture, l'une des colonnes étant agencée à proximité d'un côté latéral de l'empilement et à l'opposé de l'autre colonne agencée à proximité de l'autre côté latéral de l'empilement.

Ainsi, une fois l'étape l/ des perçages réalisée, un canal de circulation de fluide du module d'échangeur est délimité longitudinalement par un tube 2 d'une rangée, en bout par la lame 5 et/ou par le bouchon plein 3 de la rangée concernée, et enfin transversalement par les orifices 22 et 410 de la rangée concernée.

Etape m/ : On soude un collecteur de fluide 6, 7 sur l'enveloppe métallique en regard de et autour de chaque colonne d'orifice 22, 410.

Tel qu'illustré en figure 1B, chaque collecteur 6, 7 est constitué respectivement d'une portion hémicylindrique fermée 60, 70 et d'une portion tubulaire 61, 71 débouchant dans la portion hémicylindrique.

Tel qu'illustré en figure 1B, la portion hémicylindrique fermée 60, 70 est soudée uniquement sur une des plaques de fermeture 41, 43.

Bien que non représenté, on soude également un collecteur de fluide en bout de part et d'autre du module d'échangeur de sorte à l'alimenter par un fluide au niveau des extrémités débouchantes 20 des tubes 2.

Grâce au procédé selon les étapes a/ à m/, on obtient un module d'échangeur de chaleur qui est compact et assemblé par soudage-diffusion en CIC à haute pression.

Un tel module d'échangeur de chaleur selon l'exemple 1/ peut être considéré comme étant à canaux de circulation de fluide de faibles dimensions.

Dans un tel module d'échangeur de chaleur, chaque fluide suit un trajet en forme de L et le transfert thermique d'un des deux fluides avec l'autre est effectué entre deux rangées adjacentes dans l'empilement puisqu'un fluide circule dans les rangées de rang impair 2.1, 2.3, ... 2i-1 tandis que l'autre circule dans les rangées de rang pair 2.2, 2.4, ...2.i.

Un tel module d'échangeur peut fonctionner selon un mode de transfert en co-courant ou en contre-courant. Dans le mode de transfert en co-courant, l'un des fluides pénètre dans le module par les extrémités ouvertes 20 des tubes 2 depuis un côté latéral de l'empilement et l'autre fluide pénètre par le collecteur de fluide 6 ou 7 à proximité du même côté latéral. Dans le mode de transfert en contre-courant, l'un des fluides pénètre dans le module par les extrémités ouvertes 20 des tubes 2 depuis un côté latéral de l'empilement et l'autre fluide pénètre par le collecteur de fluide 7 ou 6 à proximité du côté latéral opposé.

Ainsi, le collecteur 6 ou 7 soudé sur l'une des plaques de fermeture peut être un collecteur d'entrée ou de sortie d'un des fluides.

### Exemple 2

Etape a/ : On réalise un échangeur de chaleur à deux circuits d'une pluralité de tubes métalliques 2 tous identiques entre eux.

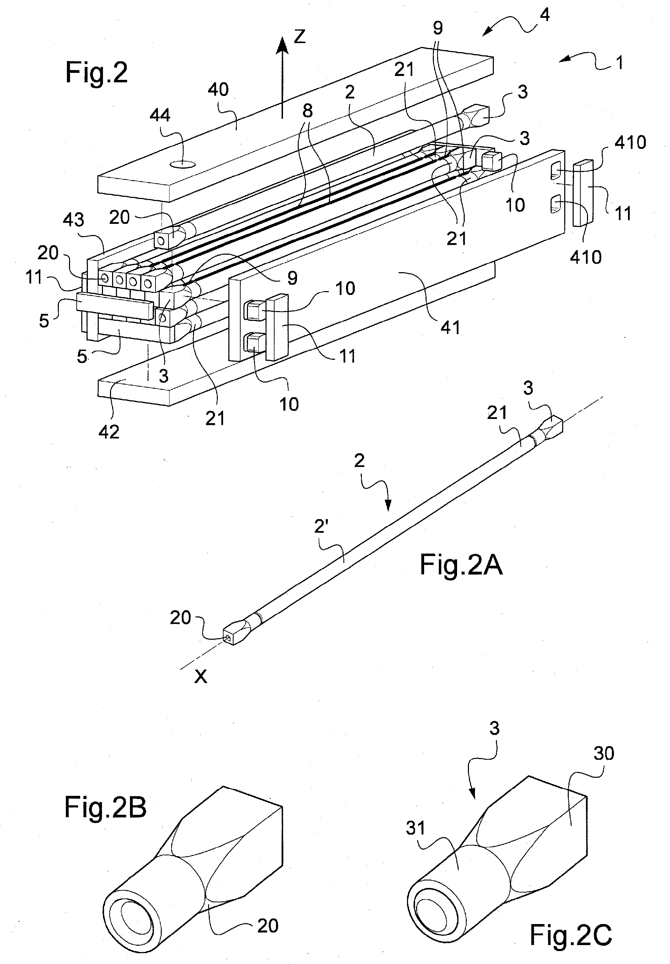

Tel que mieux illustré en figure 2A, chaque tube métallique 2 est droit d'axe longitudinal X, de section circulaire sur la majeure partie 2' de sa longueur, ses extrémités ouverte 20 et borgne 3 étant de section carrée.

Dans l'exemple illustré, l'extrémité ouverte 20 est formée par étirage de la section circulaire des tubes. L'extrémité borgne est réalisée par soudage TIG d'un bouchon plein 3. Ce bouchon plein 3 comprend une section carrée 30 prolongée une section tubulaire circulaire 31 positionnée à l'extrémité 21 de la partie droite circulaire 2' avant leur soudage pour réaliser l'extrémité borgne 3.

A titre d'exemple, un tube 2 fabriqué est en acier inoxydable 316L et présente une épaisseur de paroi de 1 mm et une section 2' circulaire de diamètre extérieur 4 mm sur une longueur de 127,5 mm à laquelle s'ajoute une extrémité ouverte 20 formée par étirage à la géométrie carrée 4x4mm sur une longueur de 4mm, la zone de transition entre la section carrée et la section circulaire étant de 4mm. A titre d'exemple également, un bouchon plein 3 en nickel a une section 30 carrée 4x4mm sur une longueur de 4mm, une zone de transition entre la section carrée 30 et la section circulaire 31 de 4mm et une section circulaire de diamètre 4mm sur une longueur de 5mm. La longueur totale est de 135,5mm.

Chaque tube métallique 2 de section circulaire sur la majeure partie de sa longueur définit ainsi un canal de circulation de fluide de l'échangeur comme expliqué ci-après.

Les étapes b/ à d/ sont réalisées comme dans l'exemple 1/ également avec une seule rangée par groupe de tubes empilée en alternance avec une seule rangée de l'autre groupe.

En revanche, dans cet exemple 2, les tubes métalliques 2 d'une rangée sont jointifs entre eux par leurs sections carrées et avec ceux de la rangée adjacente également par leurs sections carrées.

Dans l'exemple illustré en figure 2, chaque rangée est constituée d'un nombre égal à cinq tubes droits 2 et l'empilement est constitué d'un nombre égal à quatre rangées de tubes droits.

Dans l'exemple illustré en figure 2, les jeux ménagés sont tous de valeur égale. Par exemple, la valeur de ces jeux obtenus par décalage est égale à 2 mm.

Tel qu'illustré en figure 2, l'exemple 2/ se distingue également de l'exemple 1/ par la présence de fils 8, 9 insérés individuellement dans l'espace laissé libre entre deux tubes 2 côte à côte.

Les fils 8 sont en un matériau très bon conducteur thermique. Ils peuvent être avantageusement en cuivre. A titre d'exemple, les fils 8 ont un diamètre de 1 mm sur une longueur de 122 mm.

Dans le prolongement de chacun de ces fils 8 et du côté des bouchons pleins 3, est inséré un fil 9 dont la fonction est de protéger le fil 8 en cas d'étape ultérieure de dissolution du bouchon plein 3 par voie chimique. Ces fils 9 peuvent par exemple être en acier inoxydable 316L. A titre d'exemple, chaque fil 9 a un diamètre de 1mm sur une longueur de 10 mm.

L'étape e/ est réalisée comme dans l'exemple 1/ avec une encapsulation de l'empilement par mise en place respectivement d'une enveloppe métallique 4 sur les côtés longitudinaux de l'empilement de tubes 2 et de lames métalliques 5 en bout des extrémités borgnes 3 décalées des tubes, dans chaque jeu ménagé.

A titre d'exemple, les quatre plaques 40, 41, 42, 43 de l'exemple 2/ de la figure 2/ sont en acier inoxydable 316L et chacune d'épaisseur 4 mm. Tout comme dans l'exemple 1/, la plaque supérieure 40 est percée d'un orifice traversant pour accepter un queusot. A titre d'exemple, le queusot a un diamètre interne de 6mm.

A titre d'exemple également, toutes les lames métalliques 5 sont identiques et d'épaisseur égale au jeu de décalage réalisé. Elles peuvent être réalisées en acier inoxydable 316L.

Tel qu'illustré en figure 2, l'exemple 2/ se distingue également de l'exemple 1/ par la présence des orifices 410 percés dans les deux plaques de fermeture 41, 43 au préalable de l'étape i/ de CIC. Ces orifices 410 sont ainsi percés en regard de part et d'autre de chaque rangée de tubes 2, mais uniquement en regard des bouchons pleins 3. A l'intérieur de chacun de ces orifices 410 réalisés par perçage est inséré un plot 10, avantageusement de formes complémentaires.

La fonction de ces plots 10 est de combler l'espace intérieur des orifices 410 pendant l'étape i/ de CIC et de pouvoir être éliminé par dissolution par voie chimique.

Ces plots 10 sont de préférence en le même matériau que les bouchons pleins 3. Ils sont avantageusement en nickel.

Dans cet exemple 2/, l'enveloppe d'encapsulation comprend des lames métalliques 11 qui viennent s'appuyer contre les plaques de fermeture 41, 43 en recouvrant les plots 10 logés dans les orifices 410. A titre d'exemple, les lames 11 sont en acier inoxydable 316L.

L'étape f/ de soudage est réalisée comme dans l'exemple 1/, après avoir nettoyé chacune des pièces de l'empilement, et avec en outre des lignes de soudure, de préférence par soudage TIG, effectuées autour de chacune des lames métalliques 11 sur les plaques de fermeture 41, 43 également pour rendre complètement étanche l'empilement,

L'étape h/ est réalisée comme dans l'exemple 1/.

L'étape i/ est réalisée en appliquant à l'empilement un cycle de CIC comprenant un chauffage à 1040°C, une pressurisation simultanée à 1000 bar en 2h, un palier de maintien en température et pression pendant une durée de 2h puis un refroidissement et une dépressurisation en 5h. Pendant cette opération, le gaz pénètre dans les canaux par leur extrémité ouverte 20, ce qui a pour conséquence de modifier légèrement la géométrie de leur section circulaire par élimination des jeux situés entre les tubes 2 et les fils 8.

L'étape j/ de traitement thermique d'hypertrempe destiné à restaurer les propriétés de l'acier 316L est le cas échéant réalisée comme dans l'exemple 1/.

L'étape k/ est réalisée comme dans l'exemple 1/ avec en outre la suppression des lames métalliques 11, de préférence par usinage, ce qui a pour effet de rendre accessible les bouchons pleins 3 et plots 10 en matériau apte à être dissous par voie chimique, tel que le nickel.

Etape l/ : On immerge alors l'empilement dans un bain d'acide nitrique, ce qui pour effet de dissoudre tous les bouchons pleins 3 et les plots 10 et permet ainsi d'ouvrir transversalement dans le plan de chaque rangée les extrémités des tubes tout en laissant les lames métalliques 5 en place. Ainsi, l'étanchéité en bout de chaque rangée est assurée par une lame métallique 5 soudée. Lors de cette étape d'immersion de l'empilement, les fils 9, par exemple en acier 316L, empêchent l'acide nitrique d'atteindre les fils 8 conducteurs thermiques, par exemple en cuivre, par ailleurs soudés par diffusion aux tubes 2.

L'étape m/ de soudage est réalisée comme dans l'exemple 1/ mais ici deux collecteurs de fluide par circuit sont rapportés, chacune en regard de et autour des orifices 410 d'une colonne. Ainsi, pour un circuit de fluides, deux collecteurs sont ici soudés en regard l'un de l'autre et de part et d'autre de l'empilement.

Grâce au procédé selon les étapes a/ à m/, on obtient un module d'échangeur de chaleur qui est compact et assemblé par soudage-diffusion en CIC haute pression.

Un tel module d'échangeur de chaleur selon l'exemple 2/ peut être considéré comme étant à canaux de circulation de fluide de faibles dimensions et à performances thermiques améliorées par la présence des fils 9 conducteurs thermiques au sein de l'empilement et soudés par diffusion aux canaux.

### Exemple 3

Ce qui suit concerne un exemple hors de la portée des revendications. Etape a/ : On réalise un réacteur-échangeur de chaleur à deux circuits d'une pluralité de tubes métalliques 2A, 2B de deux types différents.

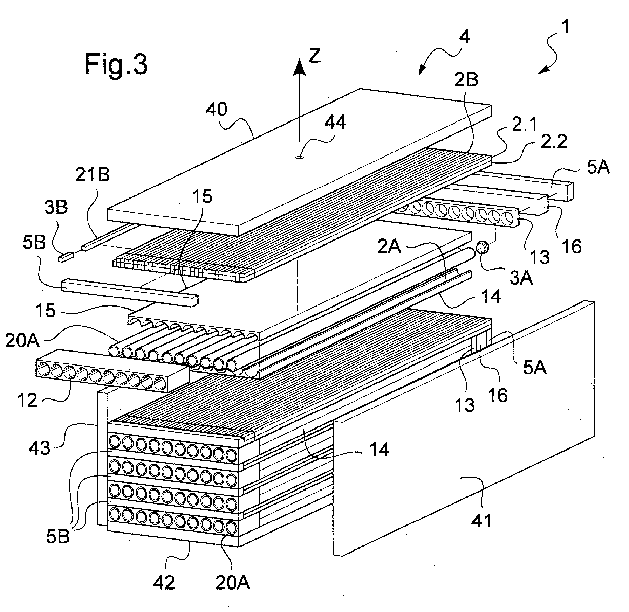

Tel qu'illustré en figure 3, les tubes 2A de plus grande section constituent la partie de réaction du réacteur tandis que les tubes 2B de moins grande section constituent la partie usuellement appelée utilité.

Tel que mieux illustré en figure 3, chaque tube métallique 2A est droit, de section circulaire sur toute sa longueur avec une extrémité ouverte 20 laissée telle quelle après fabrication et avec l'autre de ses extrémités 21 fermée de manière étanche par un bouchon plein 3A également de section circulaire. Autrement dit, une fois finalisé, chaque tube droit 2A est ouvert à l'une de ses extrémités 20A et borgne à l'extrémité opposée 21A, 3A.

A titre d'exemple, un tube 2A fabriqué est en acier inoxydable 316L et présente un diamètre extérieur 12 mm sur une longueur de 450 mm, et une épaisseur de paroi de 1 mm. A titre d'exemple également, le bouchon plein 3A est également une pastille en nickel et est soudé par soudage TIG à l'extrémité 21A du tube 2A. A titre d'exemple, une pastille 3A est d'épaisseur 4 mm, rentrant sur 2 mm.

Chaque tube 2B est droit, de section carrée sur toute sa longueur avec une extrémité ouverte 20B laissée telle quelle après fabrication et avec l'autre de ses extrémités 21B fermée de manière étanche par un bouchon plein 3B également de section carrée.

A titre d'exemple, un tube 2B fabriqué est en acier inoxydable 316L et présente une section carrée de 4x4 mm sur une longueur de 450 mm, et une épaisseur de paroi de 1 mm. A titre d'exemple également, un bouchon plein 3B est en nickel et est soudé par soudage TIG à l'extrémité 21B du tube 2B. A titre d'exemple, un bouchon plein 3B est de dimensions égales à 4*4*22 mm, rentrant sur 2 mm.

Etapes b/ à d/ : Elles se distinguent de celles des exemples 1/ et 2/ car ici une seule rangée 2.3 du groupe de tubes 2A à section circulaire est empilée en alternance avec deux rangées 2.1, 2.2 du groupe de tubes 2B à section carrée.

Autrement dit, tel qu'illustré en figure 3, deux rangées 2.1, 2.2 de tubes 2B à section carrée sont empilées l'une sur l'autre et empilées toutes les deux en alternance avec positionnement tête-bêche avec une seule rangée 2.3 de tubes 2A à section circulaire.

Tel qu'illustré en figure 3, les extrémités 20A et 21A des tubes 2A de section circulaire d'une même rangée 2.3 sont formées au carré en étant chacune emmanchées à l'intérieur d'un embout 12, 13 de section carrée. De préférence, les embouts 12, 13 sont dans le même matériau que les tubes 2A de section circulaire, par exemple de l'acier inoxydable 316L.

Ainsi, dans cet exemple 3, les tubes 2A d'une rangée ne sont pas complètement jointifs entre eux du fait des épaisseurs de paroi des embouts 12, 13.

Egalement tel qu'illustré en figure 3, chaque rangée du groupe de tubes droits 2A de section circulaire est constituée d'un nombre égal à dix tubes et chaque rangée du groupe de tubes droits de section carré 2B est constitué d'un nombre égal à trente-deux tubes.

Chaque rangée du groupe de tubes droits 2A de section circulaire est inséré entre deux plaques rainurées 14, 15, avantageusement identiques. Ces deux plaques rainurées 14, 15 font office de demi-coquilles autour des tubes 2A d'une rangée. Autrement dit, positionnées autour des tubes droits 2A d'une même rangée, les rainures des plaques 14, 15 viennent épouser individuellement chaque tube droit de section circulaire 2A.

Ainsi, tel qu'illustré en figure 3, dans l'empilement, deux plaques rainurées 14, 15 encapsulent avec contact une rangée 2.3 de tubes de section circulaire 2A et sont chacune en contact surfacique avec une rangée 2.2 adjacente du groupe de tubes 2B de section carrée.

Les plaques rainurées 14, 15 sont en un matériau très bon conducteur thermique. Elles peuvent être avantageusement en alliage de cuivre CuCrZr.

Les plaques 14, 15 sont de préférence toutes identiques entre elles dans l'empilement.

A titre d'exemple, une plaque rainurée 14 ou 15 a une épaisseur de 7 mm, et présentent des rainures de diamètre 12.2 mm réalisées avec un pas de 12.7 mm.

Ainsi, à titre d'exemple, les dimensions d'une rangée de tubes de section circulaire 2A sont égales 452x128x14mm.

Comparativement, à titre d'exemple et avec les données chiffrées indiquées ci-dessus, les dimensions des deux rangées 2.1, 2.2 empilées l'une sur l'autre du groupe de tubes à section carrée 2B sont égales à 470x128x8mm.

Les rangées 2.1, 2.2 du groupe de tubes de section carrée 2B sont donc plus longues de 18mm qu'une rangée 2.3 du groupe de tubes de section circulaire 2A.

Ainsi, dans l'exemple illustré en figure 3, les jeux ménagés aux extrémités borgnes 21A, 3A des tubes 2A de section circulaire ont une valeur supérieure à ceux des extrémités borgnes 21B, 3B des tubes 2B de section carrée.

Ici, pour combler les jeux de valeur différente aux extrémités borgnes 21A, 3A des tubes 2A de section circulaire et aux extrémités borgnes 21B, 3B des tubes 2B de section carrée, on rajoute un barreau 16 en bout de chaque extrémité borgne 21A, 3A des tubes 2A de section circulaire. Le barreau 16 est en matériau apte à être dissous par voie chimique. A titre d'exemple, il est en nickel. Ses dimensions peuvent être égales à 18x128x14 mm.

Etape e/ : Elle est réalisée comme dans l'exemple 1/ avec une encapsulation de l'empilement par mise en place respectivement d'une enveloppe métallique 4 sur les côtés longitudinaux de l'empilement de tubes 2A, 2B mais avec des lames métalliques 5A et 5B de hauteur différente en bout des extrémités borgnes 3 décalées des tubes respectivement 2A et 2B.

A titre d'exemple, les quatre plaques 40, 41, 42, 43 de l'exemple 3/ de la figure 3/ sont en acier inoxydable 316L et chacune d'épaisseur 4 mm. Tout comme dans l'exemple 1/, la plaque supérieure 40 est percée d'un orifice traversant pour accepter un queusot. A titre d'exemple, le queusot a un diamètre interne de 6 mm.

A titre d'exemple, une lame métallique 5A est de dimensions égales à 10*128*14mm et une lame métallique 5B est de dimensions égales à 10*128*8 mm.

L'étape f/ de soudage est réalisée comme dans les exemples 1/ et 2/, après avoir nettoyé chacune des pièces de l'empilement, et avec en outre des lignes de soudure, de préférence par soudage TIG, effectuées autour de chaque embout 12, de chaque lame 5A et 5B et de chacune des extrémités ouverte 20A des tubes de section circulaire également pour rendre complètement étanche l'empilement.

L'étape i/ est réalisée en appliquant à l'empilement un cycle de CIC comprenant un chauffage à 1040°C, une pressurisation simultanée à 1000 bar en 2h, un palier de maintien en température et pression pendant une durée de 3h puis concomitamment un refroidissement et une dépressurisation en 5h. Pendant cette opération, le gaz pénètre dans les tubes 2A, 2B par leur extrémité ouverte 20A, 20B mais n'infiltre pas les interfaces entre les pièces de l'empilement grâce aux bouchons pleins soudés 3A, 3B, aux lames 5A, 5B et aux soudures périphériques d'étanchéité.

L'étape j/ de traitement thermique consiste en un traitement d'hypertrempe permettant simultanément une mise en solution de l'alliage de cuivre CuCrZr et de l'acier 316L suivi d'un traitement de vieillissement du CuCrZr.

L'étape k est réalisée comme dans l'exemple 1/

Etape l/: On perce par usinage comme dans l'exemple 1/ au moins une plaque de fermeture 41 en regard d'une part des barreaux 16 et des bouchons pleins 3A et d'autre part en regard des bouchons pleins 3B.

On immerge alors l'empilement dans un bain d'acide nitrique comme dans l'exemple 2, ce qui pour effet de dissoudre tous les bouchons pleins 3A et 3B et les barreaux 16 et permet ainsi d'ouvrir transversalement dans le plan de chaque rangée les extrémités des tubes 2A, 2B tout en laissant les lames métalliques 5A, 5B en place.. Ainsi, l'étanchéité en bout de chaque rangée est assurée par une lame métallique 5A ou 5B soudée. Lors de cette étape d'immersion de l'empilement, les embouts 12, 13, par exemple en acier 316L, empêchent l'acide nitrique d'atteindre les plaques rainurées 14, 15 très bons conducteurs thermiques, par exemple en CuCrZr, par ailleurs soudées par diffusion aux tubes 2A et 2B. On peut insérer des mélangeurs statiques dans les tubes de réaction 2A.

L'étape m/ de soudage est réalisée comme dans l'exemple 1/.

Grâce au procédé selon les étapes a/ à m/, on obtient un module de réacteur-échangeur de chaleur qui est compact et assemblé par soudage-diffusion en CIC haute pression.

Un tel module d'échangeur de chaleur selon l'exemple 3/ peut être considéré comme étant à canaux de circulation de fluide de faibles dimensions et aux performances thermiques et de réaction en continu améliorées par la présence des plaques 14, 15 très bons conducteurs thermiques et soudés par diffusion aux canaux et qui entourent les tubes de section circulaire 2A qui constituent de préférence les canaux de réaction.

Bien entendu, la présente invention n'est pas limitée aux variantes et aux modes de réalisation décrits fournis à titre d'exemples illustratifs et non limitatifs.

Ainsi, par exemple pour réaliser les canaux de circulation de fluide, on peut utiliser aussi bien des tubes de section circulaire, carrée, rectangulaire, hexagonale ou de toute autre géométrie de section convenant à l'application d'échangeur visée. Les tubes peuvent également présenter une géométrie en zigzag ou autre tout étant de forme allongée et avec des extrémités de section droite et, dans ce cas, des lames métalliques supplémentaires peuvent être ajoutées de part et d'autre des rangées de tubes de façon à combler l'espace entre elles et les plaques métalliques constituant l'enveloppe métallique d'encapsulation.

L'extrémité ouverte des tubes peut être telle quelle, formée par tout moyen adapté à une géométrie de section différente de celle de la longueur courante, ou soudée à un bouchon percé, la solution retenue dépendant de la présence ou non de plaques enserrant les tubes comme dans l'exemple 3/, de la facilité de formage des tubes (nature du matériau, épaisseur de paroi...).

L'extrémité borgne des tubes peut être obtenue par pincement, par soudage d'un bouchon, d'une pastille ou par tout autre moyen adapté.

Comme indiqué dans l'exemple 3/, la taille des canaux pour chacun des circuits de fluide peut être différente selon la nature et les propriétés des fluides à véhiculer, les pertes de charges admissibles et le débit souhaité. On peut empiler plusieurs rangées (au moins deux) de canaux de circulation du même circuit dans le but d'optimiser une fonctionnalité de l'échangeur, par exemple l'échange thermique ou le débit d'un des fluides.

L'espace entre tubes côte à côte peut être laissé libre, dans ce cas il peut y avoir une légère expansion des tubes lors de la CIC, ou peut être comblé en tout ou partie par l'utilisation d'un matériau solide (fils 8, 9 de l'exemple 2 et plaques rainurées 14, 15 de l'exemple 3) ou d'un matériau pulvérulent. Les avantages procurés par la possibilité de combler ces espaces sont, d'une part, la possibilité d'utiliser des tubes de section circulaire sans risque de les rompre lors de l'étape i/ de CIC et, d'autre part, la possibilité d'insérer dans le composant un matériau différent de façon à améliorer une de ses fonctions, par exemple les performances d'échange thermique, comme dans les exemples 2/ et 3/, ou la tenue mécanique en insérant un matériau plus résistant mécaniquement que le matériau constitutif des tubes.

Si les exemples illustrés 1/ à 3/ concernent des échangeurs à exactement deux circuits de fluides, il est possible de fabriquer un échangeur à trois circuits de fluides ou plus, en insérant dans l'empilement des rangées supplémentaires comportant des tubes bouchés à une de leurs extrémités.

Si dans les exemples illustrés 1/ à 3/, l'enveloppe métallique d'encapsulation est constituée de quatre plaques, il est possible de les remplacer par un conteneur fabriqué au préalable, avec l'avantage de simplifier le soudage d'étanchéité. Ce conteneur forme alors un fourreau dans lequel les rangées de tubes sont empilées au préalable.

Si dans l'exemple illustré 1/, les deux collecteurs sont agencés de part et d'autre de l'empilement, il est possible de les agencer sur une même plaque de fermeture 41 ou 43.

Dans l'exemple 3/, il est tout à fait possible d'équiper le circuit de fluides de la partie réaction (tubes 2A de section circulaire) de mélangeurs statiques dont la géométrie est adaptée pour mélanger au mieux les réactants dans les tubes 2A. De tels mélangeurs peuvent être insérés individuellement dans un tube 2A après l'étape i/ de CIC selon l'invention. Leur fixation peut être réalisée par exemple par soudure TIG, laser ou autre.

Pour parvenir jusqu'à l'étape d/, on peut procéder à la mise en place tube par tube ou rangée(s) de groupe par rangée(s).

Les modules d'échangeurs de chaleur obtenus selon le procédé de l'invention peuvent être assemblés les uns aux autres, par exemple en utilisant des brides ou en soudant les tuyauteries d'amenée de fluides. On peut ainsi envisager de réaliser un système échangeur de chaleur à plusieurs modules reliés entre eux dans lequel les échanges se font en plusieurs étapes avec des températures moyennes différentes ou des écarts de température par module suffisamment réduits pour diminuer les contraintes thermiques dans les matériaux. Par exemple, dans le cas d'un échangeur de chaleur dans lequel on désire transférer la chaleur d'un premier fluide à un second, on peut concevoir un système d'échangeur modulaire dans lequel chaque module permet de diminuer la température du premier fluide d'une valeur donnée, limitant ainsi les contraintes par rapport au cas d'une conception à un seul module présentant un écart de température plus élevé. Pour cela, la température d'entrée du second fluide peut différer d'un module à l'autre. Dans un autre exemple, un système de réacteur-échangeur modulaire permet de mener une réaction chimique complexe par étages en contrôlant précisément la température de réaction à chaque étage, pour minimiser les risques et maximiser les rendements.

Un système d'échangeurs de chaleur à plusieurs modules permet aussi de diminuer les coûts de maintenance, en permettant le remplacement individuel d'un module défaillant, voire les coûts de fabrication par standardisation des modules.

### REFERENCE CITEE

[1] *«Fusion reactor first wall fabrication techniques* de G. Le Marois, E.Rigal, P.Bucci, (Fusion Engineering and Design pp 61-62 (2002) 103-110 Elsevier Science B.V);

## Revendications

1. Procédé de réalisation d'un module d'échangeur de chaleur à au moins deux circuits de fluide comportant chacun des canaux, comportant les étapes suivantes :
a/ réalisation d'au moins deux groupes distincts de tubes métalliques (2; 2A, 2B), chaque tube étant de forme allongée et ayant au moins ses deux extrémités droites dont l'une (20; 20A, 20B) est ouverte et l'autre (21, 3; 21A, 3A-21B, 3B) est borgne;
b/ alignement de chacun des deux groupes avec positionnement côte à côte des tubes selon au moins une rangée (2.1, 2.2, 2.3,...2i-1, 2i) par groupe;
c/ empilage en alternance avec positionnement tête-bêche de la (des) rangée(s) d'un groupe et de celle(s) de l'autre groupe de sorte à avoir les rangées les unes sur les autres et les extrémités borgnes des tubes d'un groupe disposées du même côté latéral de l'empilement que les extrémités ouvertes des tubes de l'autre groupe ;
d/ décalage, selon une direction orthogonale à la direction d'empilage, de la (des) rangée(s) d'un groupe relativement à celle(s) de l'autre groupe, de sorte à ménager des jeux, sur chaque côté latéral de l'empilement, entre les extrémités borgnes des tubes d'un groupe et les extrémités ouvertes des tubes de l'autre groupe;
e/ encapsulation de l'empilement par mise en place respectivement d'une enveloppe métallique (4) sur les côtés longitudinaux de l'empilement de tubes et de lames métalliques (5 ; 5A, 5B) en bout des extrémités borgnes décalées des tubes, dans chaque jeu ménagé;
f/ soudage à la périphérie de l'enveloppe, de chaque lame et de chaque extrémité ouverte de tube de sorte à rendre étanche l'intérieur de l'empilement encapsulé tout en laissant dégagées les extrémités ouvertes des tubes;
i/ application d'un cycle de compression isostatique à chaud (CIC) à haute pression à l'empilement dégazé en laissant pénétrer le gaz de pressurisation dans tous les tubes par leurs extrémités ouvertes (20; 20A, 20B) de sorte à obtenir un soudage par diffusion entre les constituants de l'empilement encapsulé, les tubes soudés par diffusion de chaque groupe formant les canaux d'un circuit de fluide du module;
l/ perçage transversal des tubes, dans le plan de chaque rangée et à proximité des côtés latéraux de l'empilement, les orifices (22, 410) de chaque groupe de tubes, réalisés par perçage, débouchant sur un côté longitudinal de l'empilement à travers l'enveloppe en formant une colonne, les deux colonnes d'orifices (22, 410) étant agencées chacune à proximité d'un côté latéral de l'empilement et à l'opposé l'une de l'autre.

2. Procédé de réalisation d'un module d'échangeur de chaleur à au moins deux circuits de fluide comportant chacun des canaux, comportant les étapes suivantes :
a/ réalisation d'au moins deux groupes distincts de tubes métalliques (2; 2A, 2B), chaque tube étant de forme allongée et ayant au moins ses deux extrémités droites dont l'une (20; 20A, 20B) est ouverte et l'autre (21, 3; 21A, 3A-21B, 3B) est borgne, l'extrémité borgne étant réalisée par soudage sur le tube d'un bouchon plein (3) apte à être dissout par voie chimique.
b/ alignement de chacun des deux groupes avec positionnement côte à côte des tubes selon au moins une rangée (2.1, 2.2, 2.3,...2i-1, 2i) par groupe;
c/ empilage en alternance avec positionnement tête-bêche de la (des) rangée(s) d'un groupe et de celle(s) de l'autre groupe de sorte à avoir les rangées les unes sur les autres et les extrémités borgnes des tubes d'un groupe disposées du même côté latéral de l'empilement que les extrémités ouvertes des tubes de l'autre groupe ;
d/ décalage, selon une direction orthogonale à la direction d'empilage, de la (des) rangée(s) d'un groupe relativement à celle(s) de l'autre groupe, de sorte à ménager des jeux, sur chaque côté latéral de l'empilement, entre les extrémités borgnes des tubes d'un groupe et les extrémités ouvertes des tubes de l'autre groupe;
e/ encapsulation de l'empilement par mise en place respectivement d'une enveloppe métallique (4) sur les côtés longitudinaux de l'empilement de tubes et de lames métalliques (5 ; 5A, 5B) en bout des extrémités borgnes décalées des tubes, dans chaque jeu ménagé, l'enveloppe métallique présente des plots (10) aptes à être dissouts par voie chimique, en regard de part et d'autre de chaque rangée de tube et uniquement en regard des bouchons pleins;
f/ soudage à la périphérie de l'enveloppe, de chaque lame et de chaque extrémité ouverte de tube de sorte à rendre étanche l'intérieur de l'empilement encapsulé tout en laissant dégagées les extrémités ouvertes des tubes;
i/ application d'un cycle de compression isostatique à chaud (CIC) à haute pression à l'empilement dégazé en laissant pénétrer le gaz de pressurisation dans tous les tubes par leurs extrémités ouvertes (20; 20A, 20B) de sorte à obtenir un soudage par diffusion entre les constituants de l'empilement encapsulé, les tubes soudés par diffusion de chaque groupe formant les canaux d'un circuit de fluide du module;
l/ dissolution chimique des bouchons pleins et des plots par immersion dans un bain d'acide de préférence de l'acide nitrique.

3. Procédé selon la revendication 1 ou 2, l'enveloppe comportant un orifice traversant (44), selon lequel on réalise les étapes suivantes entre les étapes f/ et i/ :
g/ dégazage de l'intérieur de l'empilement étanche à travers l'orifice traversant;
h/ fermeture de l'orifice traversant.

4. Procédé selon l'une des revendications 1 à 3, les tubes réalisés selon l'étape a/ étant des tubes droits.

5. Procédé selon l'une des revendications 1 à 4, les tubes étant tous identiques entre eux.

6. Procédé selon l'une des revendications 4 ou 5, les tubes d'au moins un groupe étant droits et de section carrée sur leur longueur.

7. Procédé selon l'une des revendications 4 à 6, les tubes d'au moins un groupe étant droits et de section circulaire sur la majeure partie de leur longueur, leurs extrémités ouverte et borgne étant de section carrée.

8. Procédé selon l'une quelconque des revendications précédentes, l'étape e/ étant réalisée avec une enveloppe comportant quatre plaques métalliques (40, 41, 42, 43), chacune étant plaquée contre un des quatre bords longitudinaux de l'empilement et l'étape f/ étant réalisée par soudage des quatre plaques métalliques deux à deux.

9. Procédé selon l'une quelconque des revendications précédentes, le cycle de CIC selon l'étape i/ étant réalisé à une pression comprise entre 500 et 2000 bar, avantageusement 1000 bar.

10. Procédé selon l'une quelconque des revendications précédentes, comportant une étape j/, ultérieure à l'étape i/, consistant en un traitement thermique destiné à restaurer les propriétés des matériaux métalliques des pièces constituant ledit module.

11. Procédé selon la revendication 1, comprenant une étape m/ de soudage d'un collecteur de fluide (6, 7) sur l'enveloppe, en regard de et autour de chaque colonne d'orifice.

12. Procédé selon l'une quelconque des revendications 3 à 11, comportant une étape de nettoyage des constituants de l'empilement encapsulé avant l'étape g/ de dégazage.

13. Module d'échangeur de chaleur à au moins deux circuits de fluide obtenu selon le procédé selon l'une quelconque des revendications précédentes.

14. Module d'échangeur de chaleur selon la revendication 13, dans lequel au moins les tubes (2 ; 2A, 2B), les lames (5 ; 5A, 5B) et l'enveloppe (4) sont en acier austénitique, tel que l'acier 316L.

15. Système d'échangeur de chaleur comprenant une pluralité de modules selon la revendication 13 ou 14 reliés entre eux.

## Patentansprüche

1. Verfahren zur Herstellung eines Wärmetauschermoduls mit mindestens zwei Fluidkreisläufen, die je Kanäle aufweisen, das die folgenden Schritte aufweist:
a/ Herstellen von mindestens zwei unterschiedlichen Gruppen von Metallrohren (2; 2A, 2B), wobei jedes Rohr von länglicher Form ist und mindestens seine zwei Enden gerade hat, von denen das eine (20; 20A, 20B) offen und das andere (21, 3; 21A, 3A-21B, 3B) blind ist;
b/ Ausrichten jeder der zwei Gruppen mit Nebeneinander-Positionierung der Rohre gemäß mindestens einer Reihe (2.1, 2.2, 2.3, ... 2i-1, 2i) pro Gruppe;
c/ abwechselndes Stapeln mit Kopf-bei-Fuß-Positionierung der Reihe(n) einer Gruppe und denjenigen der anderen Gruppe, um die Reihen übereinander und die blinden Enden der Rohre einer Gruppe auf der gleichen lateralen Seite des Stapels wie die offenen Enden der Rohre der anderen Gruppe angeordnet zu haben;
d/ Versetzen, gemäß einer Richtung orthogonal zur Stapelrichtung, der Reihe(n) einer Gruppe bezüglich denjenigen der anderen Gruppe, um auf jeder lateralen Seite des Stapels zwischen den blinden Enden der Rohre einer Gruppe und den offenen Enden der Rohre der anderen Gruppe Spielräume auszusparen;
e/ Einkapseln des Stapels durch Einsetzen einer metallischen Hülle (4) auf den Längsseiten des Stapels der Rohre und von metallischen Lamellen (5; 5A, 5B) am Ende der versetzten blinden Enden der Rohre in jedem ausgesparten Spielraum;
f/ Schweißen, an den Umfang der Hülle, jeder Lamelle und jedes offenen Rohrendes, um das Innere des eingekapselten Stapels abzudichten, während die offenen Enden der Rohre frei gelassen werden;
i/ Anwenden eines heißisostatischen Presszyklus (CIC) bei hohem Druck auf den entgasten Stapel, indem das Druckbeaufschlagungsgas in alle Rohre über ihre offenen Enden (20; 20A, 20B) eingelassen wird, um ein Diffusionsschweißen zwischen den Bestandteilen des eingekapselten Stapels zu erhalten, wobei die diffusionsgeschweißten Rohre jeder Gruppe die Kanäle eines Fluidkreislaufs des Moduls bilden;
l/ Querbohren der Rohre, in der Ebene jeder Reihe und in der Nähe der lateralen Seiten des Stapels, wobei die durch Bohren hergestellten Öffnungen (22, 410) jeder Gruppe von Rohren auf einer Längsseite des Stapels durch die Hülle hindurch münden, indem sie eine Kolonne bilden, wobei die zwei Kolonnen von Öffnungen (22, 410) je in der Nähe einer lateralen Seite des Stapels und einander gegenüberliegend eingerichtet sind.

2. Verfahren zur Herstellung eines Wärmetauschermoduls mit mindestens zwei Fluidkreisläufen, die je Kanäle aufweisen, das die folgenden Schritte aufweist:
a/ Herstellen von mindestens zwei unterschiedlichen Gruppen von Metallrohren (2; 2A, 2B), wobei jedes Rohr von länglicher Form ist und mindestens seine zwei Enden gerade hat, von denen das eine (20; 20A, 20B) offen und das andere (21, 3; 21A, 3A-21B, 3B) blind ist, wobei das blinde Ende durch Schweißen eines massiven Stopfens (3) auf das Rohr hergestellt wird, der chemisch aufgelöst werden kann;
b/ Ausrichten jeder der zwei Gruppen mit Nebeneinander-Positionierung der Rohre gemäß mindestens einer Reihe (2.1, 2.2, 2.3, ... 2i-1, 2i) pro Gruppe;
c/ abwechselndes Stapeln mit Kopf-bei-Fuß-Positionierung der Reihe(n) einer Gruppe und denjenigen der anderen Gruppe, um die Reihen übereinander und die blinden Enden der Rohre einer Gruppe auf der gleichen lateralen Seite des Stapels wie die offenen Enden der Rohre der anderen Gruppe angeordnet zu haben;
d/ Versetzen, gemäß einer Richtung orthogonal zur Stapelrichtung, der Reihe(n) einer Gruppe bezüglich denjenigen der anderen Gruppe, um auf jeder lateralen Seite des Stapels zwischen den blinden Enden der Rohre einer Gruppe und den offenen Enden der Rohre der anderen Gruppe Spielräume auszusparen;
e/ Einkapseln des Stapels durch Einsetzen einer metallischen Hülle (4) auf den Längsseiten des Stapels der Rohre und von metallischen Lamellen (5; 5A, 5B) am Ende der versetzten blinden Enden der Rohre in jedem ausgesparten Spielraum; wobei die metallische Hülle Blöcke (10), die chemisch aufgelöst werden können, zu beiden Seiten gegenüber jeder Rohrreihe und nur gegenüber den massiven Stopfen aufweist;
f/ Schweißen, an den Umfang der Hülle, jeder Lamelle und jedes offenen Rohrendes, um das Innere des eingekapselten Stapels abzudichten, während die offenen Enden der Rohre frei gelassen werden;
i/ Anwenden eines heißisostatischen Presszyklus (CIC) bei hohem Druck auf den entgasten Stapel, indem das Druckbeaufschlagungsgas in alle Rohre über ihre offenen Enden (20; 20A, 20B) eingelassen wird, um ein Diffusionsschweißen zwischen den Bestandteilen des eingekapselten Stapels zu erhalten, wobei die diffusionsgeschweißten Rohre jeder Gruppe die Kanäle eines Fluidkreislaufs des Moduls bilden;
l/ chemisches Auflösen der massiven Stopfen und der Blöcke durch Eintauchen in ein Säurebad, vorzugsweise Salpetersäure.

3. Verfahren nach Anspruch 1 oder 2, wobei die Hülle eine Durchgangsöffnung (44) aufweist, gemäß dem die folgenden Schritte zwischen den Schritten f/ und i/ durchgeführt werden:
g/ Entgasen des Inneren des dichten Stapels durch die Durchgangsöffnung hindurch;
h/ Schließen der Durchgangsöffnung.

4. Verfahren nach einem der Ansprüche 1 bis 3, wobei die gemäß dem Schritt a/ hergestellten Rohre gerade Rohre sind.

5. Verfahren nach einem der Ansprüche 1 bis 4, wobei die Rohre alle untereinander gleich sind.

6. Verfahren nach einem der Ansprüche 4 oder 5, wobei die Rohre mindestens einer Gruppe gerade sind und einen quadratischen Querschnitt über ihre Länge haben.

7. Verfahren nach einem der Ansprüche 4 bis 6, wobei die Rohre mindestens einer Gruppe gerade sind und einen kreisförmigen Querschnitt über den größten Teil ihrer Länge haben, wobei ihre offenen und blinden Enden einen quadratischen Querschnitt haben.

8. Verfahren nach einem der vorhergehenden Ansprüche, wobei der Schritt e/ mit einer Hülle durchgeführt wird, die vier Metallplatten (40, 41, 42, 43) aufweist, die je gegen einen der vier Längsränder des Stapels gedrückt sind, und der Schritt f/ durch paarweises Schweißen der vier Metallplatten durchgeführt wird.

9. Verfahren nach einem der vorhergehenden Ansprüche, wobei der CIC-Zyklus gemäß dem Schritt i/ auf einem Druck zwischen 500 und 2000 Bar, vorteilhafterweise 1000 Bar, durchgeführt wird.

10. Verfahren nach einem der vorhergehenden Ansprüche, das einen Schritt j/ nach dem Schritt i/ aufweist, der aus einer Wärmebehandlung besteht, die dazu bestimmt ist, die Eigenschaften der metallischen Werkstoffe der das Modul bildenden Bauteile wiederherzustellen.

11. Verfahren nach Anspruch 1, das einen Schritt m/ des Schweißens eines Fluidsammlers (6, 7) auf die Hülle gegenüber jeder und um jede Öffnungskolonne herum enthält.

12. Verfahren nach einem der Ansprüche 3 bis 11, das einen Schritt der Reinigung der Bestandteile des eingekapselten Stapels vor dem Schritt g/ der Entgasung aufweist.

13. Wärmetauschermodul mit mindestens zwei Fluidkreisläufen, erhalten gemäß dem Verfahren nach einem der vorhergehenden Ansprüche.

14. Wärmetauschermodul nach Anspruch 13, wobei mindestens die Rohre (2; 2A, 2B), die Lamellen (5; 5A, 5B) und die Hülle (4) aus austenitischem Stahl sind, wie der Stahl 316L.

15. Wärmetauschersystem, das eine Vielzahl von Modulen nach Anspruch 13 oder 14 enthält, die miteinander verbunden sind.

## Claims

1. A method for producing a heat exchanger module with at least two fluid circuits each comprising channels, comprising the following steps:
a/ producing at least two separate groups of metal tubes (2; 2A, 2B), each tube being of elongated shape and having at least two straight ends, one thereof (20; 20A, 20B) being open and the other (21, 3; 21A, 3A-21B, 3B) being blind;
b/ aligning each of the two groups with side-by-side positioning of the tubes in at least one row (2.1, 2.2, 2.3,...2i-l, 2i) per group;
c/ alternate stacking with top-to-toe positioning of the row(s) of one group and the row(s) of the other group so as to have the rows on top of one another and the blind ends of the tubes of one group arranged on the same lateral side of the stack as the open ends of the tubes of the other group;
d/ offsetting, in a direction at right angles to the stacking direction, of the row(s) of one group relative to the row(s) of the other group, so as to create gaps on each lateral side of the stack, between the blind ends of the tubes of one group and the open ends of the tubes of the other group;
e/ encapsulating the stack by positioning respectively one metal casing (4) on the longitudinal sides of the stack of tubes and metal strips (5; 5A, 5B) at the end of the offset blind ends of the tubes in each gap created;
f/ welding on the periphery of the casing, each strip and each open end of the tube so as to seal the inside of the encapsulated stack whilst leaving free the open ends of the tubes;
i/ applying a hot isostatic pressing (HIP) cycle at high pressure to the degassed stack, allowing the pressurizing gas to penetrate into all of the tubes via their open ends (20; 20A, 20B) so as to obtain welding by diffusion between the constituent parts of the encapsulated stack, the tubes of each group welded by diffusion forming the channels of a fluid circuit of the module;
l/ transverse boring of the tubes, in the plane of each row and in the vicinity of the lateral sides of the stack, the orifices (22, 410) of each group of tubes, produced by boring, opening out onto one longitudinal side of the stack through the casing, forming a column, the two columns of orifices (22, 410) each being arranged in the vicinity of one lateral side of the stack and opposing one another.

2. A method for producing a heat exchanger module with at least two fluid circuits each comprising channels, comprising the following steps:
a/ producing at least two separate groups of metal tubes (2; 2A, 2B), each tube being of elongated shape and having at least two straight ends, one thereof (20; 20A, 20B) being open and the other (21, 3; 21A, 3A-21B, 3B) being blind; the blind end being achieved by welding, on the tube, a solid stopper (3) capable of being dissolved by chemical means;
b/ aligning each of the two groups with side-by-side positioning of the tubes in at least one row (2.1, 2.2, 2.3,...2i-l, 2i) per group;
c/ alternate stacking with top-to-toe positioning of the row(s) of one group and the row(s) of the other group so as to have the rows on top of one another and the blind ends of the tubes of one group arranged on the same lateral side of the stack as the open ends of the tubes of the other group;
d/ offsetting, in a direction at right angles to the stacking direction, of the row(s) of one group relative to the row(s) of the other group, so as to create gaps on each lateral side of the stack, between the blind ends of the tubes of one group and the open ends of the tubes of the other group;
e/ encapsulating the stack by positioning respectively one metal casing (4) on the longitudinal sides of the stack of tubes and metal strips (5; 5A, 5B) at the end of the offset blind ends of the tubes in each gap created; the metal casing have studs (10) able to be eliminated by dissolving by chemical means, facing either side of each row of tubes and only facing the solid stoppers;
f/ welding on the periphery of the casing, each strip and each open end of the tube so as to seal the inside of the encapsulated stack whilst leaving free the open ends of the tubes;
i/ applying a hot isostatic pressing (HIP) cycle at high pressure to the degassed stack, allowing the pressurizing gas to penetrate into all of the tubes via their open ends (20; 20A, 20B) so as to obtain welding by diffusion between the constituent parts of the encapsulated stack, the tubes of each group welded by diffusion forming the channels of a fluid circuit of the module;
l/ chemical dissolving of the solid stoppers and studs by immersion in an acid bath, preferably nitric acid.

3. The method as claimed in claim 1 or claim 2, the casing comprising a through-opening (44) according to which the following steps are carried out between steps f/ and i/:
g/ degassing the interior of the sealed stack via the through-opening;
h/ closing the through-opening.

4. The method as claimed in one of claims 1 to 3, the tubes produced according to step a/ being straight tubes.

5. The method as claimed in one of claims 1 to 4, the tubes all being identical to one another.

6. The method as claimed in one of claims 4 or 5, the tubes of at least one group being straight and of square section over their length.

7. The method as claimed in one of claims 4 to 6, the tubes of at least one group being straight and of circular section over the major part of their length, their open and blind ends being of square section.

8. The method as claimed in any one of the preceding claims, the step e/ being carried out with a casing comprising four metal plates (40, 41, 42, 43), each being pressed against one of the four longitudinal edges of the stack and the step f/ being carried out by welding the four metal plates in pairs.

9. The method as claimed in any one of the preceding claims, the HIP cycle according to step i/ being carried out at a pressure of between 500 and 2000 bar, advantageously 1000 bar.

10. The method as claimed in any one of the preceding claims, comprising a step j/, subsequent to step i/, consisting of a heat treatment designed to restore the properties of the metal materials of the components which constitute said module.

11. The method as claimed in claim 1, comprising a step m/ of welding a fluid collector (6, 7) to the casing, opposite and around each column of orifices.

12. The method as claimed in any one of claims 3 to 11, comprising a step of cleaning the constituent parts of the encapsulated stack before the degassing step g/.

13. A heat exchanger module with at least two fluid circuits obtained according to the method as claimed in any one of the preceding claims.

14. The heat exchanger module as claimed in claim 13, in which at least the tubes (2; 2A, 2B), the strips (5; 5A, 5B) and the casing (4) are made of austenitic steel, such as 316L steel.

15. A heat exchanger system comprising a plurality of modules as claimed in claim 13 or 14 connected together.
